# EUROPEAN PATENT SPECIFICATION

(11) **EP 0 737 030 B1**
(45) Date of publication and mention of the grant of the patent: **12.04.2000**
(21) Application number: 95901361.6
(22) Date of filing: 29.11.1994
(51) Int. Cl.: A01D 41/12, A01F 12/00

(54) **APPARATUS FOR CONVEYANCE CHAFF, WASTE SEED, SMALL GRAINS ETC. IN A HARVESTER**
APPARAT ZUM FÖRDERN VON SPREU, ABFALLGETREIDE, KLEINKÖRNERN USW. IN EINER ERNTEMASCHINE
APPAREIL POUR LE TRANSPORT DE LA BALLE, DES GRAINS DE REBUT ET DES GRAINS DE PETITE TAILLE NOTAMMENT, DANS UNE MOISSONNEUSE

(30) Priority: 30.11.1993 DK 52693
(43) Date of publication of application: 16.10.1996
(73) Proprietor: Welling, Christian Haldrup, 9240 Nibe (DK)
(72) Inventor: Welling, Christian Haldrup, 9240 Nibe (DK)
(74) Representative: Gregersen, Niels Henrik
(86) International application number: DK9400443
(87) International publication number: WO9515077

(56) References cited:
- EP-A- 0 181 500
- DE-C- 3 325 951
- DK-U- 9 300 526
- GB-A- 2 217 566
- US-A- 3 860 010

## Description

The present invention relates to an apparatus for conveyance chaff, waste seed, small grains etc. in a selfpropelled harvester and of the type described in the introductory part of claim 1.

By harvesting with a harvester the fact has hitherto not been realized that it may results in more disadvantages that chaff, waste seed, small grains etc. from the riddle system or screen system of the harvester are discharged directly on the ground. Firstly the material lost in this way has a relative large fodder value, and secondly the discharge of waste seed and small grains directly on the field later on may result in an additional consumption of spraying agents for the "weed-fighting".

DE-A-3 325 951 discloses a selfpropelled harvester of the type comprising a special transversely arranged separation drum in which the very first separation of the grains from the straw is worked out before the grains are discharged through a grating wall of the drum to the underlying screen or riddle system for further cleansing from waste material such as short straw pieces, chaff, waste seed, small grains etc. During the rotation the separation drum carries the straw towards opposite ends of the separation drum for discharge thereof on the ground under the screen or riddle system by means of two worm-conveyors - in such a manner that the straw is discharged on the ground in a position in front of the discharge end of the screen or riddle system. However, small selfpropelled harvesters of this type are not used any longer because such a cleansing system is certainly not able to meet the demand of high capacity as required in modem harvesting.

The invention has for its purpose to provide an apparatus by means of which it in a simple manner becomes possible to remedy the said disadvantages.

According to the invention the apparatus is characterized in that said apparatus comprising means adapted to discharge said waste material together with the straw on top of the straw string after the discharge thereof on the ground, and that said conveyance means consist of an endless conveyor, which is constructed from a number of generally box-shaped, straight channel sections and special arched corner sections, and which comprises a number of scraper elements projecting sideways from a chain, which is stretching along the inner walls of said channel and corner sections, and that said conveyance means comprise a drive station placed in one of the corner sections and being provided with a chain driving wheel, which is driven by a hydraulic motor, and which is arranged displacable in such a manner that the chain driving wheel also acts as a tightening wheel. In a simple manner it is hereby obtained that it becomes possible to collect, to inter-conveyance said "waste materiale" so that this may be discharged together with the straw. By subsequence collecting and pressing of the straw there may be saved a very large part of said waste material, which has considerable fodder and thermal values.

It should be pointed out that it is considerable values which may be gained by means of the invention, since experiments have shown that between 18 - 26% of the corn weight which is harvested by means of a harvester is discharged on the ground from the riddle system in the form of chaff, waste seed and small grains. Subsequently it may be possible further to save considerable costs by the fact that the need for weed-fighting with spraying agents may be considerably reduced.

In a simple manner and in order to obtain sufficient strength and stiffness said scraper elements may consist of arched, shell-shaped elements, which by way of example being made from cutting outs of hard plastic tubes with large diameter.

Alternatively, the apparatus according to the invention may be such provided that said conveyance means consist of a combined air and blowing conveyor being supplied with air from a separate take-off from the existing blower of the harvester, said air and blowing conveyor cooperating with a cyclone-like braking device, from which the waste material is discharged together with the straw on top of the straw string.

The invention is described in more details in the following, reference being made to the accompanying drawing, in which:-
- Fig. 1: shows a harvester, which is provided with an apparatus according to the invention,
- Fig. 2: shows an embodiment for an apparatus according to the invention - seen from above,
- Fig. 3: shows the apparatus cf. Fig. 2 - seen from the riddle system of the harvester, and
- Fig. 4: shows an embodiment for a conveyance element for the apparatus according to the invention.

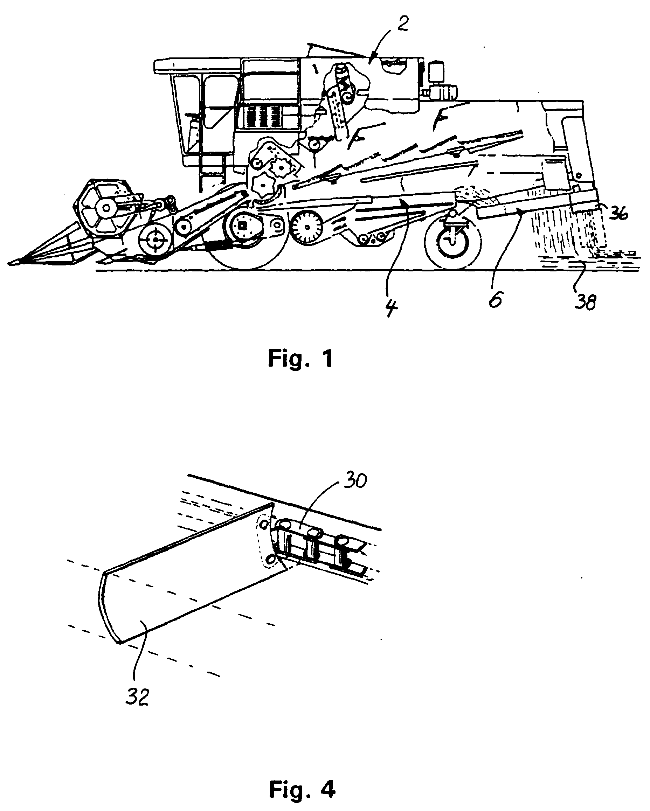

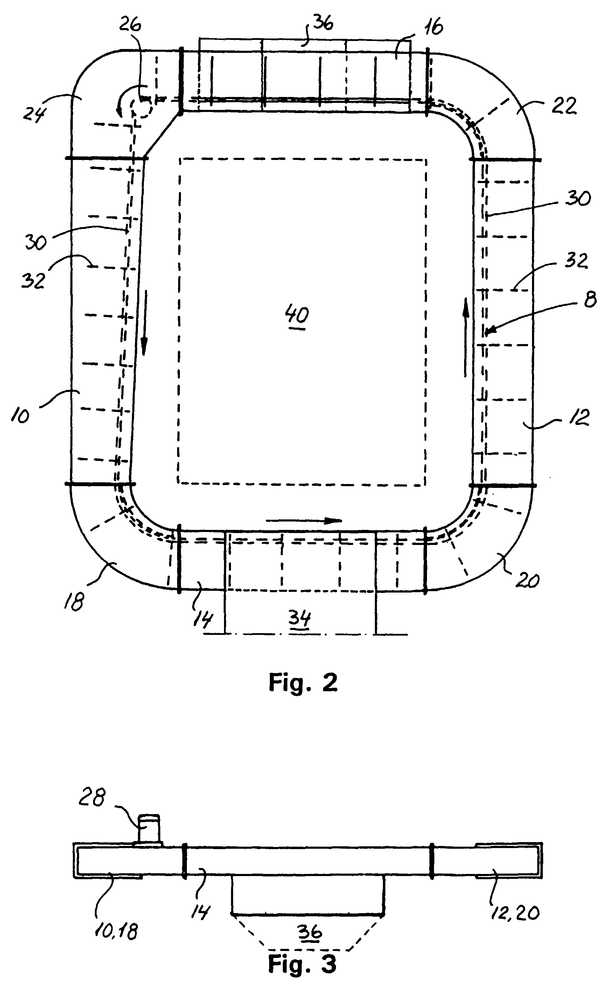

The harvester 2 shown in Fig. 1 is behind a so-called riddle box (screen and riddle system) provided with an embodiment for an apparatus 6 (Figs. 2 and 3) according to the invention, which apparatus 6 comprises an endless scraper conveyor 8 constructed from two mainly straight box-shaped side sections 10 and 12, two also straight end sections 14 and 16 and of four corner sections 18, 20, 22 and 24, of which the corner section 24 furthermore comprises a drive station 26, which is driven by a hydraulic motor 28.

The scraper conveyor 8 comprises an endless roller chain 30 (Fig. 4), to which sideways projecting, arched scraper elements 32 are secured, which - in order to obtain in a particular simple manner sufficient stiffness - are cut from hard plastic tubes (for instance PEL-tubes) with large diameter.

The scraper conveyor 8, which in Fig. 2 is seen from above, comprises a receiving position 34, where chaff, waste seed, small grains, etc. are supplied from the riddle box 4. From the receiving position 34 the collected material is conveyed via the end section 14, the corner section 20, the side section 12, the corner section 22 and the end section 16 to a discharge position 36, from which chaff, waste seed, small grains, etc. may be discharged on top of the straw string 38 (Fig. 1), as the discharge of the straw from the harvester 2 takes place through the marked central zone 40 of the scraper conveyor 8 (Fig. 2).

The corner section 24, which comprises the driving station 26, has a little larger width towards the left side section 10, which towards the central zone 40 has inclined side, which is due to the fact that the driving station 26 comprises tightening function for the endless conveyor chain 30.

It should be mentioned, that the main aspect of the invention - collecting, intermediate conveyance and delayed discharge of chaff, waste seed, small grains, etc. in relation to the straw discharge - in order to be able to discharge the collected materiale **on top** of or in the straw string **rather than** on the ground in front of or in the straw discharge position - may be obtained by means of other suited conveyance means being able to lead the collected material round the straw discharge position. By way of example this may presumably be achieved by means of a suitable worm conveyor stretching in an curve round the straw discharge, or by means of an endless cup elevator (paternoster) and a chute system.

An other alternative possibility of arranging collecting, intermediate coveyance and delayed discharge of said waste material could be to make use of a combined air or blower conveyor for instance with a cyclone-like braking device, from which the waste material may be discharged in or on the straw string.

A such combined air or blower conveyor may be supplied with air from a separate take-off from the existing blower of the harvester. In order to avoid unfortunate influence of the function of the screen and riddle system of the harvester, a such separate air-take-off should preferably be positioned before the screen and riddle system of the harvester.

## Claims

1. An apparatus (6) for conveyance of chaff, waste seed, small grains etc. in a selfpropelled harvester (2), comprising conveyance means being adapted to collect said waste material from the screen or riddle system (4) of the harvester (2) and to convey it to a discharge position (36), ***characterized*** in that said apparatus comprising means adapted to discharge said waste material together with the straw on top of the straw string (38) after the discharge thereof on the ground, and that said conveyance means consist of an endless conveyor (8), which is constructed from a number of generally box-shaped, straight channel sections (10, 12, 14, 16) and special arched corner sections (18, 20, 22, 24), and which comprises a number of scraper elements (32) projecting sideways from a chain (30), which is stretching along the inner walls of said channel and corner sections, that said conveyor (8) comprises a drive station (26) placed in one of the corner sections (24) and being provided with a chain drive wheel, which is driven by a hydraulic motor (28), and which is arranged displaceable in such a manner that the chain driving wheel also acts as a tightening wheel.

2. An apparatus (6) according to claim 1, ***characterized*** in that said scraper elements consist of arched, shell-shaped elements (32), which by way of example are made from cutting outs of hard plastic tubes with large diameter.

3. An apparatus (6) for conveyance of chaff, waste seed, small grains etc. in a selfpropelled harvester (2), comprising conveyance means being adapted to collect said waste material from the screen or riddle system (4) of the harvester (2) and to convey it to a discharge position (36), ***characterized*** in that said conveyance means consist of a combined air and blowing conveyor, which is supplied with air from a separate take-off from the exsisting blower of the harvester (2), said air and blowing conveyor cooperating with a cyclone-like braking device, from which the waste material is discharged together with the straw on top of the straw string (38).

## Patentansprüche

1. Apparat (6) zur Beförderung von Spreu, verlorenen Samen, Samenkörnern, usw. in einem selbstfahrenden Mähdrescher (2), der Transportorgane umfasst, die dazu berechnet sind, das genannte Verlustmaterial von dem Siebkasten (4) des Mähdreschers (2) aufzusammeln und es zu einer Ableitungsposition (36) zu befördern, dadurch **gekennzeichnet,** daß der genannte Apparat Mittel umfasst, die dazu berechnet sind, das Verlustmaterial zusammen mit dem Stroh oben auf den Strohstrang (38) nach dem Ablassen von diesem auf den Ackerboden abzulassen, und daß die genannten Transportorgane aus einem endlosen Bandförderer (8) bestehen, der aus einer Anzahl überwiegend kasten-geformter, gerader Kanalsektionen (10, 12, 14, 16) und besonderer gebogener Ecksektionen (18, 20, 22, 24) aufgebaut ist und der eine Anzahl Kratzerelementen (32) umfasst, die seitwärts von einer Kette (30) herausragen, die sich die Innenwände entlang der genannten Kanal- und Ecksektionen erstreckt, daß der genannte Bandbeförderer (8) eine in einer der Ecksektionen (24) angebrachte und mit einem Kettenrad versehene Zugstation (26) umfasst, welches Kettenrad von einem hydraulischen Motor (28) getrieben wird und verschiebbar in der Art angeordnet ist, daß das Kettenrad auch als Spannrad funktionniert.

2. Apparat (6) nach Anspruch 1, dadurch **gekennzeichnet,** daß die genannten Kratzerelementen aus gebogenen, schalengeformten Elementen (32) bestehen, die zum Beispiel durch Aufschneiden harter Plastikrohre mit großem Durchmesser hergestellt werden.

3. Apparat (6) zur Beförderung von Spreu, verlorenen Samen, Samenkörnern, usw. in einem selbstfahrenden Mähdrescher (2), der Transportorgane umfasst, die dazu berechnet sind, das genannte Verlustmaterial von dem Siebkasten (4) des Mähdreschers (2) aufzusammeln und es zu einer Ableitungsposition (36) zu befördern, dadurch **gekennzeichnet,** daß die genannten Transportorgane aus einem kombinierten Luft- und Gebläse-Bandförderer bestehen, der mit Luft von einem separaten Auslaß des vorhandenen Gebläses des Mähdreschers (2) gespeist wird, da der genannte Luft- und Gebläse-Bandförderer mit einer zyklonartigen Bremzeinrichtung zusammenwirkt, wovon das Verlustmaterial zusammen mit dem Stroh oben auf den Strohstrang (38) abgelassen wird.

## Revendications

1. Appareil (6) pour le transport de bale, de semence perdue, de petites graines etc. dans une moissonneuse-batteuse automobile (2) comprenant des moyens de transport étant destinés à collecter ladite matière perdue du système de trémie (4) de la moissonneuse-batteuse (2) et à la conduire à une position de déchargement (36), **caractérisé** en ce que ledit appareil comprenant des moyens destinés à décharger ladite matière perdue avec la paille audessus de l'andain de paille (38) après le déchargement de celui-ci sur le terrain, et que lesdits moyens de transport se composent d'un transporteur automatique à chaîne sans fin (8), qui est construit d'un nombre de sections de canalisation droites et surtout en forme de caisse (10, 12, 14, 16) et de sections spéciales angulaires en forme d'arc (18, 20, 22, 24) et qui comprend un nombre d'éléments de racloir (32) se projetant latéralement d'une chaîne (30) qui s'étend le long des parois intérieures desdites sections de canalisation et sections angulaires, que ledit transporteur automatique à double chaîne (8) comprend une station de traction (26) placée dans une des sections angulaires (24) et étant pourvu d'une roue à chaîne qui est tramée d'un moteur hydraulique (28) et qui est montée de manière déplaçable de sorte que la roue à chaîne aussi fonctionne en tant que roue de tension.

2. Appareil (6) selon la revendication 1, **caractérisé** en ce que lesdits éléments de racloir sont composés d'éléments conchoïdes en forme d'arc (32) qui par exemple sont formés en coupant des tuyeaux plastiques durs à grand diamètre.

3. Appareil (6) pour le transport de bale, de semence perdue, de petites graines etc. dans une moissonneuse-batteuse automobile (2) comprenant des moyens de transport étant destinés à collecter ladite matière perdue du système de trémie (4) de la moissonneuse-batteuse (2) et à la conduire à une position de déchargement (36), **caractérisé** en ce que lesdits moyens de transport se composent d'un transporteur combiné d'air et de ventilateur qui est alimenté en air d'une sortie séparée du ventilateur existant de la moissonneuse-batteuse (2), ledit transporteur d'air et de ventilateur coopérant avec un organe de freinage semblable à cyclone, à partir duquel la matière perdue est déchargée avec la paille audessus de l'andain de paille (38).
